# EUROPÄISCHE PATENTSCHRIFT

(11) **EP 3 342 251 B1**
(45) Veröffentlichungstag und Bekanntmachung des Hinweises auf die Patenterteilung: **30.09.2020**
(21) Anmeldenummer: 16757238.7
(22) Anmeldetag: 25.08.2016
(51) Int. Cl.: H05B 1/02, H05B 3/34, B62D 1/06, B60N 2/56

(54) **TEMPERIERVORRICHTUNG MIT MEHREREN TEMPERIERSCHICHTEN UND VERFAHREN ZUM BETREIBEN EINER TEMPERIERVORRICHTUNG**
TEMPERING DEVICE WITH MULTIPLE TEMPERING LAYER AND METHOD FOR OPERATING A TEMPERING DEVICE
DISPOSITIF DE TEMPÉRAGE AVEC PLUSIEURS COUCHES DE TEMPÉRAGE ET PROCÉDÉ DE FONCTIONNEMENT D'UN DISPOSITIF DE TEMPÉRAGE

(30) Priorität: 27.08.2015 DE 102015011064
(43) Veröffentlichungstag der Anmeldung: 04.07.2018
(73) Patentinhaber: Gentherm GmbH, 85235 Odelzhausen (DE)
(72) Erfinder: PANYI, Gábor, 2084 Pilisszentiván (HU)
(74) Vertreter: Benninger, Johannes
(86) Internationale Anmeldenummer: PCT/EP2016/070115
(87) Internationale Veröffentlichungsnummer: WO 2017/032846

(56) Entgegenhaltungen:
- WO-A1-2015/091598
- DE-A1-102008 064 225
- DE-U1-202007 010 960
- US-A- 3 739 142
- US-A- 5 352 862
- US-A1- 2010 089 894

## Beschreibung

Die vorliegende Erfindung betrifft eine Temperiervorrichtung zur Temperierung eines Gegenstandes mit den Merkmalen des unabhängigen Anspruchs 1. Zudem betrifft die Erfindung ein Verfahren zur Betreiben einer Temperiervorrichtung mit den Merkmalen des unabhängigen Verfahrensanspruchs 15.

Es sind bereits unterschiedliche Ausführungsvarianten von Temperiervorrichtungen bekannt, welche zur Temperierung verschiedener zu temperierender Bereiche von Gegenständen vorgesehen sind. Bei einem zu temperierenden Bereich eines Gegenstands kann es sich beispielsweise um eine Oberfläche eines Fahrzeuglenkrads oder eines Fahrzeugsitzes handeln. Die Temperiervorrichtung umfasst dabei beispielsweise flächig an einem Trägermaterial im Bereich der zu temperierenden Oberfläche des Fahrzeuglenkrads angeordnete Temperierelemente, wie beispielsweise Temperierwiderstände. Die Regulation der Temperierleistung der Temperiervorrichtung kann mittels einer Temperaturkontrolleinrichtung erfolgen, wobei zudem die dabei auftretenden Temperaturen im Bereich der Temperiervorrichtung, der Temperierelemente oder einem zu temperierenden Bereich des Fahrzeuglenkrads mittels eines Temperaturerfassungselements festgestellt bzw. überwacht werden. Unter Regulation wird hier regelungstechnisch sowohl steuern als auch regeln verstanden.

Um die Dauer der Temperierung zum Erreichen der vorgesehenen Solltemperatur verkürzen zu können sind bereits Temperiervorrichtungen bekannt, welche zwei Temperierelemente in einer Temperierebene umfassen, welche unabhängig voneinander regelbar bzw. temperierbar sein können. Nach Erreichen der vorgesehenen Temperatur bzw. der vorgesehenen Temperierung wird üblicherweise eines der Temperierelemente abgeschaltet, sodass von diesem keine weitere Temperierung des zu temperierenden Bereiches erfolgen kann. Auf diese Weise ist zwar eine schnellere Temperierung des zu temperierenden Bereichs durchführbar, jedoch kann das Abschalten eines Temperierelements eine inhomogene Temperierung des zu temperierenden Bereichs zur Folge haben, da bestimmte Bereiche des zu temperierenden Bereichs, welche von dem abgeschalteten Temperierelement bedeckt werden, nicht weiter temperiert werden. Dies kann einen erheblichen Komfortmangel für den Nutzer des Gegenstands bedeuten. Eine Vorrichtung bekannter Art, gemäß dem Oberbegriff des Anspruchs 1, ist aus DE 10 2008 064225 A1 bekannt.

Angesichts dieser festgestellten Nachteile, kann es als vorrangige Aufgabe der Erfindung angesehen werden, eine Temperiervorrichtung sowie ein Verfahren zur Temperierung eines Gegenstands zur Verfügung zu stellen, welche eine kürzere Zeitspanne zum Erreichen einer vorgesehenen Solltemperatur des zur Temperierung vorgesehenen Gegenstands vorsehen bzw. benötigen und dabei eine konstante Aufrechterhaltung der vorgesehenen Solltemperatur über eine bestimmte Zeitspanne in einem vorgesehenen zu temperierenden Bereich ermöglichen.

Die obigen Aufgaben werden durch eine Temperiervorrichtung zur Temperierung eines Gegenstands gelöst, welche die Merkmale im Patentanspruch 1 umfasst. Weitere vorteilhafte Ausgestaltungen werden durch die Unteransprüche beschrieben.

Eine erfindungsgemäße Temperiervorrichtung zur Temperierung eines Gegenstandes, vorzugsweise der Oberfläche eines Gegenstandes, umfasst eine erste Temperierschicht, welche erste Temperierschicht mindestens ein erstes Temperierelement zur Temperierung der ersten Temperierschicht, sowie mindestens eine erste Temperaturerfassungseinrichtung zur Erfassung einer im Bereich der ersten Temperierschicht und/oder des mindestens einen ersten Temperierelements herrschenden oder gebildeten Temperatur aufweist. Vorzugsweise handelt es sich bei dem mindestens einen ersten Temperierelement um einen Heizwiderstand, welcher bei Beaufschlagung mit elektrischer Energie diese in thermische Energie umwandelt. Bei der mindestens einen ersten Temperaturerfassungseinrichtung kann es sich insbesondere um einen Sensor zur Erfassung einer Temperatur im Bereich der ersten Temperierschicht und/oder des mindestens einen ersten Temperierelements handeln.

Als weiteren Bestandteil umfasst die Temperiervorrichtung mindestens eine zweite Temperierschicht, welche mindestens eine zweite Temperierschicht mindestens ein zweites Temperierelement zur Temperierung der mindestens einen zweiten Temperierschicht sowie mindestens eine zweite Temperaturerfassungseinrichtung zur Erfassung einer im Bereich der mindestens zweiten Temperierschicht und/oder des mindestens einen zweiten Temperierelements herrschenden oder gebildeten Temperatur aufweist. Vorzugsweise handelt es sich auch bei dem mindestens einem zweiten Temperierelement um einen Heizwiderstand. Wie bei der mindestens einen ersten Temperiereinrichtung kann es sich auch bei der mindestens einen zweiten Temperaturerfassungseinrichtung um einen Sensor zur Erfassung einer Temperatur im Bereich der mindestens einen zweiten Temperierschicht und/oder des mindestens einen zweiten Temperierelements handeln. Vorzugsweise kann vorgesehen sein, dass die erste Temperierschicht näher an dem zu temperierenden Bereich des Gegenstands angeordnet ist als die mindestens eine zweite Temperierschicht.

Weiterhin ist mindestens eine Temperaturkontrolleinrichtung Bestandteil der Temperiervorrichtung. Die mindestens eine Temperaturkontrolleinrichtung ist zur Regulation der Temperierung und/oder der Temperatur des mindestens einen ersten Temperierelements der ersten Temperierschicht und/oder des mindestens einen zweiten Temperierelements der mindestens einen zweiten Temperierschicht vorgesehen. Zudem ist die mindestens eine Temperaturkontrolleinrichtung mit der mindestens einen ersten Temperaturerfassungseinrichtung und der mindestens einen zweiten Temperaturerfassungseinrichtung gekoppelt. Die erste Temperierschicht und die mindestens eine zweite Temperierschicht sind zumindest bereichsweise voneinander beabstandet angeordnet. Zudem sind das mindestens eine erste Temperierelement der ersten Temperierschicht und das mindestens eine zweite Temperierelement der mindestens einen zweiten Temperierschicht mittels der mindestens einen Temperaturkontrolleinrichtung unabhängig voneinander regelbar.

Gemäß der erfindungsgemäßen Temperiervorrichtung ist der ersten Temperierschicht zur Regulation der Temperierung und/oder der Temperatur des mindestens einen ersten Temperierelements eine erste Temperaturkontrolleinrichtung zugeordnet. Die erste Temperaturkontrolleinrichtung ist weiterhin auch mit der mindestens einen ersten Temperaturerfassungseinrichtung gekoppelt. Auch ist der mindestens einen zweiten Temperierschicht zur Regulation der Temperierung und/oder der Temperatur des zweiten Temperierelements eine zweite Temperaturkontrolleinrichtung zugeordnet, welche zweite Temperaturkontrolleinrichtung mit der mindestens einen zweiten Temperaturerfassungseinrichtung gekoppelt ist. Gemäß der erfindungsgemäßen Temperiervorrichtung ist der ersten Temperierschicht sowie der mindestens einen zweiten Temperierschicht zur Regulation der Temperierung und/oder der Temperatur des mindestens einen ersten Temperierelements sowie des mindestens einen zweiten Temperierelements eine erste Temperaturkontrolleinrichtung sowie eine zweite Temperaturkontrolleinrichtung zugeordnet, welche erste und zweite Temperaturkontrolleinrichtung mit der mindestens einen ersten Temperaturerfassungseinrichtung sowie der mindestens einen zweiten Temperaturerfassungseinrichtung gekoppelt sind.

Die erste Temperaturkontrolleinrichtung und die mindestens eine erste Temperaturerfassungseinrichtung sind durch ein erstes Thermostat zusammengefasst, mittels welchen ersten Thermostates somit eine Regulation der Temperierung und/oder der Temperatur des mindestens einen ersten Temperierelements und/oder eine Überwachung der Temperatur im Bereich der ersten Temperierschicht und/oder des mindestens ersten Temperierelements durchgeführt werden kann. Zudem sind auch die zweite Temperaturkontrolleinrichtung und die mindestens eine zweite Temperaturerfassungseinrichtung in einem zweiten Thermostat zusammengefasst, wobei auch hier eine Regulation der Temperierung und/oder der Temperatur des mindestens einen zweiten Temperierelements und/oder eine Überwachung der Temperatur im Bereich der zweiten Temperierschicht und/oder des mindestens einen zweiten Temperierelements ermöglicht wird.

In einer bevorzugten Ausführungsform der erfindungsgemäßen Temperiervorrichtung sind das erste Thermostat und das zweite Thermostat bzw. das erste Thermostat und das mindestens eine zweite Temperierelement jedoch zudem miteinander gekoppelt, sodass das erste Thermostat neben der Regulation der Temperierung und/oder der Temperatur des mindestens einen ersten Temperierelements und/oder der Überwachung der Temperatur im Bereich der ersten Temperierschicht und/oder des mindestens ersten Temperierelements auch die Regulation der Temperierung und/oder der Temperatur des mindestens einen zweiten Temperierelements und/oder die Überwachung der Temperatur im Bereich der zweiten Temperierschicht und/oder des mindestens einen zweiten Temperierelements übernehmen kann. Selbiges kann ebenso für das zweite Thermostat gelten. So kann das zweite Thermostat derart mit dem ersten Thermostat bzw. dem mindestens einen ersten Temperierelement gekoppelt sein, dass das zweite Thermostat neben der Regulation der Temperierung und/oder der Temperatur des mindestens einen zweiten Temperierelements und/oder der Überwachung der Temperatur im Bereich der zweiten Temperierschicht und/oder des mindestens einen zweiten Temperierelements auch zur Regulation der Temperierung und/oder der Temperatur des mindestens einen ersten Temperierelements und/oder zur Überwachung der Temperatur im Bereich der ersten Temperierschicht und/oder des mindestens ersten Temperierelements in der Lage sein kann.

Das erste Thermostat kann dabei zur Regulation der Temperierung und/oder der Temperatur des mindestens einen ersten Temperierelements und/oder des mindestens einen zweiten Temperierelements auf eine Temperatur innerhalb eines definierten Bereichs geeignet sein, wobei die Temperatur um weniger als 5°C, um weniger als 3°C, vorzugsweise allerdings um weniger als 1°C von einer vorgesehenen Solltemperatur abweicht. Das zweite Thermostat kann ebenfalls zur Regulation der Temperierung und/oder der Temperatur des mindestens einen ersten Temperierelements und/oder des mindestens einen zweiten Temperierelements auf eine Temperatur innerhalb eines definierten Bereichs geeignet sein, wobei die Temperatur um mindestens 5°C, um mindesten 8°C, vorzugsweise aber um mindestens 10°C von einer vorgesehenen Solltemperatur abweicht.

Durch die Regulation der Temperierung und/oder der Temperatur des mindestens einen ersten Temperierelements und/oder des mindestens einen zweiten Temperierelements auf eine Temperatur, welche um weniger als 5°C, 3°C oder 1°C unterhalb der Solltemperatur liegt, kann eine minimale Temperatur der Regulation durch das erste Thermostat vorgegeben werden. Durch die Regulation der Temperierung und/oder der Temperatur des mindestens einen ersten Temperierelements und/oder des mindestens einen zweiten Temperierelements auf eine Temperatur, welche um weniger als 5°C, 3°C oder 1°C oberhalb der Solltemperatur liegt, kann somit eine maximale Temperatur der Regulation durch das erste Thermostat vorgegeben werden.

Entsprechend zu der Regulation der Temperierung und/oder der Temperatur des mindestens einen ersten Temperierelements und/oder des mindestens einen zweiten Temperierelements durch das erste Thermostat ergibt sich eine minimale Temperatur der Regulation des mindestens einen ersten Temperierelements und/oder des mindestens einen zweiten Temperierelements durch das zweite Thermostat, welche um mindestens 5°C, 8°C oder 10°C unterhalb der Solltemperatur liegt und eine maximale Temperatur, welche um mindestens 5°C, 8°C oder 10°C oberhalb der Solltemperatur liegt. Bei der so entstehenden jeweiligen minimalen Temperatur und/oder der maximalen Temperatur der mindestens einen ersten und zweiten Temperierelemente kann es sich jeweils um eine minimale sowie maximale Schalttemperatur handeln, bei welchen Schalttemperaturen die erste bzw. zweite Temperaturkontrolleinrichtung bzw. das erste bzw. zweite Thermostat jeweils einen Start oder Stopp der Temperierung durch das mindestens eine erste bzw. zweite Temperierelement herbeiführt.

So kann dem ersten Thermostat vorzugsweise eine sogenannte "kleine" Hysterese zuerkannt werden, da sich die für das mindestens eine erste Temperierelement und/oder das mindestens eine zweite Temperierelement vorgesehene minimale Temperatur und/oder die maximale Temperatur der Temperierung, welche ggf. die jeweiligen Schalttemperaturen darstellen, nahe der vorgesehenen Solltemperatur befinden. Das zweite Thermostat kann hingegen eine größere Hysterese als das erste Thermostat aufweisen. Dies bedeutet, dass sich die für das mindestens eine erste Temperierelement und/oder das mindestens eine zweite Temperierelement vorgesehene minimale Temperatur und/oder maximale Temperatur für einen Start oder Stopp der Temperierung weniger nahe der vorgesehenen Solltemperatur ergeben als bei dem ersten Thermostat.

Vorzugsweise erfolgt also eine Abschaltung eines des mindestens einen ersten Temperierelements oder des mindestens einen zweiten Temperierelements durch das erste Thermostat, welches einen lediglich geringen Temperaturbereich umfasst, sobald das mindestens eine erste Temperierelement und das mindestens eine zweite Temperierelement die vorgesehene Solltemperatur, bzw. die maximale Temperatur der Regulation durch das erste Thermostat, erreicht haben. Das dabei nicht abgeschaltete mindestens eine Temperierelement kann die Temperierung fortführen. Das zweite Thermostat kann daher eine Art Sicherungsfunktion für denjenigen Fall erfüllen, falls das erste Thermostat, beispielsweise aufgrund eines Defekts, ausfällt, und eine Regulation der Temperatur und/oder der Temperierung des mindestens einen ersten Temperierelements und/oder des mindestens einen zweiten Temperierelements durch das erste Thermostat nicht möglich ist. Hierzu kann eine beispielsweise eine Abschaltung des mindestens einen ersten Temperierelements und/oder des mindestens einen zweiten Temperierelements bei Erreichen der maximalen Temperatur der Regulation durch das zweite Thermostat erfolgen. Die maximale Temperatur der durch das zweite Thermostat geregelten Temperierung des mindestens einen ersten Temperierelements und/oder des mindestens einen zweiten Temperierelements kann also dazu vorgesehen sein, zwar eine schnelle Erreichung der Solltemperatur zu ermöglichen, eine Absicherung im Falle eines Defekts des ersten Thermostats bereit zu stellen und dabei aber unerwünscht hohe Temperaturen des zu temperierenden Bereichs des Gegenstands und/oder der Temperiervorrichtung zu vermeiden.

Das mindestens eine erste Temperierelement und/oder das mindestens eine zweite Temperierelement kann vorzugsweise zeitgleich mit der Temperierung beginnen. Wie bereits erwähnt kann vorgesehen sein, dass von dem mindesten einen ersten Temperierelement und dem mindestens einen zweiten Temperierelement, welche jeweils die vorgegebene Solltemperatur erreicht haben, lediglich eines der Temperierelemente die Temperierung des zu temperierenden Bereichs des Gegenstands weiter aufrecht erhalten soll. Weiterhin kann auch ein Beenden der Temperierung durch das mindestens eine erste Temperierelement und das mindestens eine zweite Temperierelement bzw. sogar ein Ausschalten der Temperiervorrichtung vorgesehen sein, beispielsweise falls eine deutliche Solltemperaturüberschreitung erfolgt.

Die maximale Temperatur der durch das zweite Thermostat geregelten Temperierung des mindestens einen ersten Temperierelements und/oder des mindestens einen zweiten Temperierelements kann zumindest um 10°C über der Solltemperatur, vorzugsweise aber zumindest in einem Bereich über 20°C liegen. Die minimale Temperatur der durch das zweite Thermostat geregelten Temperierung des mindestens einen ersten Temperierelements und/oder des mindestens einen zweiten Temperierelements kann dabei in einem Bereich unter 20°C, vorzugsweise aber in einem Bereich unter 15°C liegen.

Gemäß einer bevorzugten Ausführungsform der erfindungsgemäßen Temperiervorrichtung ist die erste Temperierschicht und/oder das mindestens eine erste Temperierelement zumindest teilweise in einer ersten Temperierebene angeordnet, und die mindestens eine zweite Temperierschicht und/oder das mindestens eine zweite Temperierelement zumindest teilweise in einer zweiten Temperierebene. Die erste Temperierebene und die zweite Temperierebene sind dabei vorzugsweise voneinander beabstandet. Dabei kann das mindestens eine erste Temperierelement der ersten Temperierschicht zumindest teilweise auf einem ersten Trägerelement angeordnet sein, und das mindestens eine zweite Temperierelement der mindestens einen zweiten Temperierschicht zumindest teilweise auf einem zweiten Trägerelement. Vorzugsweise ist das mindestens eine erste Temperierelement auf dem ersten Trägerelement und das mindestens eine zweite Temperierelement auf dem zweiten Trägerelement flächig angeordnet. Das erste Trägerelement und das zweite Trägerelement können dabei zumindest bereichsweise voneinander beabstandet angeordnet sein. Vorzugsweise kann sich folglich das erste Trägerelement zumindest bereichsweise in der ersten Temperierebene erstrecken, und das zweite Trägerelement zumindest bereichsweise in der zweiten Temperierebene. Um eine ideale Temperaturübertragung zu dem zu temperierenden Bereich des Gegenstandes zu ermöglichen, ist es denkbar, dass das erste Trägerelement und/oder das zweite Trägerelement jeweils eine höhere Wärmeleitfähigkeit besitzen als weitere Bereiche der Temperiervorrichtung und/oder des zu temperierenden Gegenstands. Das erste und das zweite Trägerelement können daher beispielsweise aus einem Vlies- oder Schaummaterial ausgebildet sein.

Um eine einheitliche Temperierung bzw. Wärmeverteilung in dem zu temperierenden Bereich des Gegenstands zu erreichen, bildet das mindestens eine erste Temperierelement der ersten Temperierschicht mindestens eine erste elektrische Schleife aus und das mindestens eine zweite Temperierelement der mindestens einen zweiten Temperierschicht mindestens eine zweite elektrische Schleife. Vorzugsweise ist aber vorgesehen, dass das erste Temperierelement und das zweite Temperierelement jeweils mehrere elektrische Schleifen ausbilden, sodass durch die mehreren elektrischen Schleifen jeweils eine Art Temperierfläche des ersten Temperierelements und des zweiten Temperierelements aufgespannt werden kann, welche sich über einen vorgesehenen Bereich des ersten und zweiten Trägerelements in der jeweiligen ersten und zweiten Temperierebene erstrecken. Gemäß einer bevorzugten Ausführungsform der erfindungsgemäßen Temperiervorrichtung überdecken sich die mindestens eine erste elektrische Schleife des mindestens einen ersten Temperierelements, welches zumindest teilweise in der ersten Temperierebene angeordnet ist, und die mindestens eine zweite elektrische Schleife des mindestens einen zweiten Temperierelements, welches zumindest teilweise in der zweiten Temperierebene angeordnet ist, zumindest bereichsweise in horizontaler Richtung, sodass auf diese Weise eine gemeinsame Temperierung des zu temperierenden Bereichs des Gegenstandes in dem Überschneidungsbereich bzw. sich überdeckenden Bereich der mindestens einen ersten elektrischen Schleife und der mindestens einen zweiten elektrischen Schleife ermöglicht werden kann.

Durch die Anordnung des mindestens einen ersten Temperierelements in der ersten Temperierschicht sowie des mindestens einen zweiten Temperierelements in der mindestens einen zweiten Temperierschicht sowie die Bildung mindestens einer ersten elektrischen Schleife durch das mindestens eine erste Temperierelement, welches sich ggf. zumindest teilweise in der ersten Temperierebene erstrecken kann, und mindestens einer zweiten elektrischen Schleife durch das mindestens eine zweite Temperierelement, welche sich ggf. zumindest teilweise in der zweiten Temperierebene erstrecken kann, ergeben sich mehrere vorteilhafte Auswirkungen. Durch die zumindest bereichsweise Überschneidung bzw. Überdeckung der mindestens einen ersten elektrischen Schleife und der mindestens einen zweiten elektrischen Schleife kann unabhängig von der Temperierphase des mindestens einen ersten Temperierelements und des mindestens einen zweiten Temperierelements eine gleichmäßige Temperierung des zu temperierenden Bereichs des Gegenstandes ermöglicht werden. Weiterhin ergibt sich die vorteilhafte Wirkung, dass beispielsweise bei Ausschalten oder Reduzierung der Temperierleistung des mindestens einen zweiten Temperierelements der zweiten Temperierschicht keine bereichsweisen Ungleichmäßigkeiten in dem zu temperierenden Bereich des Gegenstandes auftreten bzw. wahrgenommen werden, da das mindestens eine erste Temperierelement die Temperierung weiterführen kann. Zudem ist durch die erfindungsgemäße Ausgestaltung der Temperiervorrichtung, beispielsweise durch eine Anwendung von Thermostaten, eine Kostenersparnis bei der Herstellung gegenüber weiterer Temperiervorrichtungen aus dem Stand der Technik erzielbar.

Ein weiterer Bestandteil der vorliegenden Erfindung bezieht sich auf einen zu temperierenden Gegenstand, welcher eine erfindungsgemäße Temperiereinrichtung umfasst. Insbesondere kann es sich bei dem Gegenstand um ein Fahrzeuglenkrad oder einen Fahrzeugsitz handeln. Hierbei kann beispielsweise das Fahrzeuglenkrad eine erfindungsgemäße Temperiervorrichtung aufweisen, wobei die erste Temperierschicht und die mindestens eine zweite Temperierschicht radial zueinander beabstandet angeordnet sind.

Zur Lösung der oben genannten Aufgaben schlägt die Erfindung neben der zuvor anhand unterschiedlicher Ausführungsvarianten beschriebenen erfindungsgemäßen Temperiervorrichtung auch ein Verfahren zur Regulation einer Temperiervorrichtung vor. Die im Zusammenhang mit der erfindungsgemäßen Temperiervorrichtung genannten Aspekte können auch im Zusammenhang mit dem nachfolgend dargestellten Verfahren einsetzbar und Bestandteil des nachfolgend beschriebenen Verfahrens sein.

So ist weiterhin ein Verfahren zur Regulation einer Temperiervorrichtung vorgesehen, welches zumindest folgende Schritte umfasst:
- Temperierung mindestens eines ersten Temperierelements auf eine erste Solltemperatur, wobei die erste Solltemperatur in einer ersten Zeitspanne zumindest annähernd erreicht wird,
- Temperierung mindestens eines zweiten Temperierelements auf eine zweite Solltemperatur, welche zweite Solltemperatur in einer zweiten Zeitspanne zumindest annähernd erreicht wird,
- Aufrechterhalten der ersten Solltemperatur mittels des zumindest einen ersten Temperierelements über eine dritte Zeitspanne,
- Aufrechterhalten der zweiten Solltemperatur mittels des mindestens einen zweiten Temperierelements über eine vierte Zeitspanne, wobei die dritte Zeitspanne zumindest geringfügig größer ist als die vierte Zeitspanne.

Die erste Solltemperatur und die zweite Solltemperatur können sich zumindest annähernd entsprechen. Vorzugsweise sind die erste Solltemperatur und die zweite Solltemperatur jedoch identisch.

Die Temperierung des mindestens einen ersten Temperierelements und des mindestens einen zweiten Temperierelements ist, wie bereits in Zusammenhang mit der erfindungsgemäßen Temperiereinrichtung beschrieben, durch mindestens eine Temperaturkontrolleinrichtung geregelt werden, welche zudem mit mindestens einer ersten Temperaturerfassungseinrichtung, mittels welcher die Temperatur im Bereich einer ersten Temperierschicht und/oder des mindestens einen ersten Temperierelements erfasst wird, und mit mindestens einer zweiten Temperaturerfassungseinrichtung, mittels welcher die Temperatur im Bereich mindestens einer zweiten Temperierschicht und/oder des mindestens einen zweiten Temperierelements erfasst wird, gekoppelt. Ferner, ist eine erste Temperaturkontrolleinrichtung dem mindestens einen ersten Temperierelement und eine zweite Temperaturkontrolleinrichtung dem mindestens einen zweiten Temperierelement zugeordnet. Zusätzlich ist neben einer Koppelung einer ersten Temperaturkontrolleinrichtung und einer zweiten Temperaturkontrolleinrichtung mit mindestens einer ersten Temperaturerfassungseinrichtung und mindestens einer zweiten Temperaturerfassungseinrichtung auch jeweils eine Koppelung mit dem mindestens einen ersten Temperierelement sowie dem mindestens einen zweiten Temperierelement vorgesehen.

Die mindestens eine erste Temperaturkontrolleinrichtung und die mindestens eine erste Temperaturerfassungseinrichtung sind in einem ersten Thermostat zusammengefasst, welches die Regulation der Temperierung und/oder der Temperatur des mindestens einen ersten Temperierelements übernimmt, und die mindestens eine zweite Temperaturkontrolleinrichtung und die mindestens eine zweite Temperaturerfassungseinrichtung in einem zweiten Thermostat, welches die Regulation der Temperierung und/oder der Temperatur des mindestens einen zweiten Temperierelements übernimmt. Entsprechend sind das erste Thermostat und das zweite Thermostat jedoch miteinander bzw. jeweils mit dem mindestens einen ersten Temperierelement und/oder dem mindestens einen zweiten Temperierelement gekoppelt, sodass das erste Thermostat sowie das zweite Thermostat jeweils die Regulation der Temperierung und/oder der Temperatur des mindestens einen ersten Temperierelements und/oder des mindestens einen zweiten Temperierelements durchführen kann.

Um die erste Solltemperatur mittels des mindestens einen ersten Temperierelements zu erreichen, kann eine erste Zeitspanne von beispielsweise weniger als 5s, 10s, 60s, 120s, oder auch mehr als 240s notwendig sein. Das mindestens eine zweite Temperierelement kann vorzugsweise dazu in der Lage sein, die vorgegebene zweite Solltemperatur innerhalb einer zweiten Zeitspanne, beispielsweise ebenfalls weniger als 5s, 10s, 60s, 120s oder auch mehr als 240s, zu erreichen. Vorzugsweise entsprechen sich die erste und zweite Zeitspanne. Die Temperierung des mindestens einen ersten Temperierelements auf die erste Solltemperatur und die Temperierung des mindestens einen zweiten Temperierelements auf die zweite Solltemperatur wird dabei annähernd zeitgleich, vorzugsweise jedoch zeitgleich, begonnen. Bevorzugt wird folglich auch die erste und zweite Solltemperatur zumindest annähernd zeitgleich, vorzugsweise zeitgleich, erreicht.

Insbesondere kann das mindestens eine erste Temperierelement dazu vorgesehen sein, eine zumindest annähernd konstante Temperierung bei einer vorgesehenen ersten Solltemperatur, beispielsweise bei weniger als 15°C, 20°C, 25°C oder auch mehr als 30°C, über eine längere dritte Zeitspanne, beispielsweise 0,125h, 0,25h, 0,5h, 1h oder auch mehr, aufrechtzuerhalten. Die zweite Solltemperatur kann mittels des mindestens einen zweiten Temperierelements über eine vierte Zeitspanne aufrechterhalten werden, wobei die bereits erwähnte dritte Zeitspanne der Temperierung durch das mindestens eine erste Temperierelement zumindest geringfügig größer ist als die vierte Zeitspanne der Temperierung durch das mindestens eine zweite Temperierelement. Sobald die erste Solltemperatur durch das mindestens eine erste Temperierelement erreicht wird, kann der Stromfluss zu dem mindestens einen zweiten Temperierelement unterbrochen werden, sodass durch das mindestens eine zweite Temperierelement keine weitere Temperierung erfolgt.

In manchen Fällen kann die erste Zeitspanne zur Erreichung der ersten Solltemperatur mittels des mindestens einen ersten Temperierelements geringfügig größer sein als die zweite Zeitspanne zur Erreichung der zweiten Solltemperatur mittels des mindestens einen zweiten Temperierelements, oder umgekehrt. Es kann sich dabei ergeben, dass die zweite Solltemperatur mittels des mindestens einen zweiten Temperierelements zumindest solange aufrechterhalten wird, bis das mindestens eine erste Temperierelement die erste Solltemperatur erreicht oder erreicht hat. Mittels des mindestens einen ersten Temperierelements kann, wie bereits erwähnt, die gewünschte erste Solltemperatur über eine vorgesehene dritte Zeitspanne zumindest annähernd konstant aufrechterhalten werden.

Vorzugsweise kann vorgesehen sein, dass die erste Temperierschicht bzw. das mindestens eine erste Temperierelement zumindest bereichsweise näher an dem zu temperierenden Bereich des Gegenstands angeordnet ist als die mindestens zweite Temperierschicht bzw. das mindestens eine zweite Temperierelement. In einer weiteren Ausführungsvariante kann jedoch auch vorgesehen sein, dass die mindestens zweite Temperierschicht bzw. das mindestens eine zweite Temperierelement zumindest bereichsweise näher an dem zu temperierenden Bereich des Gegenstands angeordnet ist als die erste Temperierschicht bzw. das mindestens eine erste Temperierelement. Die beschriebenen Eigenschaften des mindestens einen ersten Temperierelements und des mindestens einen zweiten Temperierelements können nachteillos vertauschbar sein.

Durch die beschriebene Vorgehensweise ergibt sich der Vorteil, dass beispielsweise während einer anfänglichen Temperierphase durch das mindestens eine zweite Temperierelement in Zusammenwirkung mit der Temperierung durch das mindestens eine erste Temperierelement eine vorgesehene Solltemperatur schnell erreicht werden kann. Dadurch wird für die gewünschte Temperierung des zu temperierenden Bereichs des Gegenstands lediglich eine annehmbare Zeitspanne benötigt, was den Komfort für den Nutzer des Gegenstandes erhöht.

Einen weiteren Bestandteil der Erfindung stellt eine Heizeinrichtung zum Heizen einer Oberfläche eines Gegenstands dar. Die Heizvorrichtung umfasst eine erste Heizschicht mit mindestens einem ersten Heizwiderstand und mit mindestens einem ersten Strom-Stellglied zum Schalten oder Dosieren des elektrischen Stromes, der den ersten Heizwiderstand durchströmt, sowie mindestens eine zweite Heizschicht mit mindestens einem zweiten Heizwiderstand und mit mindestens einem zweiten Strom-Stellglied zum Schalten oder Dosieren des elektrischen Stromes, der den zweiten Heizwiderstand durchströmt. Weiterhin weist die Heizvorrichtung mindestens eine Temperaturerfassungseinrichtung zum Erfassen einer Temperatur der Heizeinrichtung sowie mindestens eine Temperaturkontrolleinrichtung, welche zur Regulation der Temperatur mindestens einer der beiden Heizschichten vorgesehen ist, auf. Die mindestens eine Temperaturkontrolleinrichtung, die beiden Heizwiderstände und die beiden Strom-Stellglieder stehen dabei elektrisch miteinander in Verbindung. Die erste Heizschicht und die zweite Heizschicht sind einander zumindest bereichsweise überlappend angeordnet. Zudem ist vorgesehen, dass Ansteuerung des ersten Heizwiderstands durch die Heizeinrichtung unabhängig von der Ansteuerung des zweiten Heizwiderstands ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer ersten Ausführungsform einer erfindungsgemäßen Temperiervorrichtung;
Fig. 2 zeigt eine weitere schematische Ansicht bzw. eine weitere Ausführungsvariante einer ersten Temperierschicht und einer zweiten Temperierschicht, die Teil der der erfindungsgemäßen Temperiervorrichtung sind
Fig. 3 zeigt ein Flussdiagramm eines erfindungsgemäßen Verfahrens.

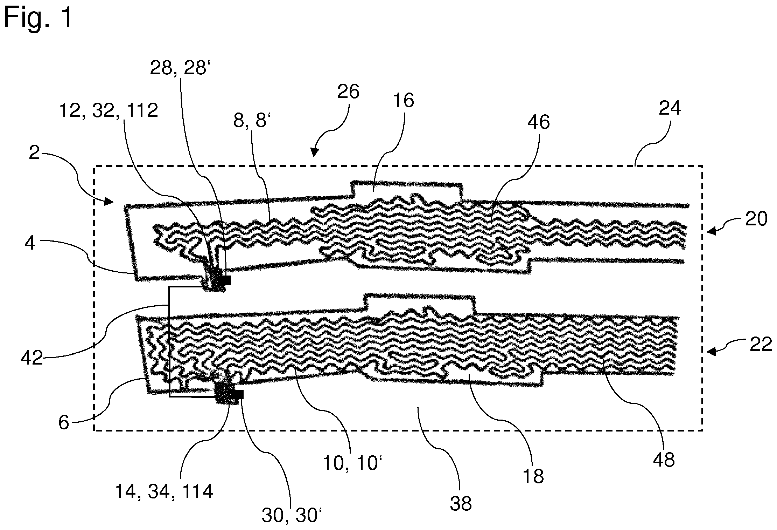

Für gleiche oder gleich wirkende Elemente der Erfindung werden in den Figuren 1, 2 und 3 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

Die schematische Ansicht der Fig. 1 zeigt eine Ausführungsvariante einer erfindungsgemäßen Temperiervorrichtung 2. Die gezeigte Temperiervorrichtung 2 umfasst eine erste Temperierschicht 4 sowie eine zweite Temperierschicht 6. Die erste Temperierschicht 4 weist ein erstes Temperierelement 8 in Form eines ersten Heizwiderstands 8' auf, welcher auf einem ersten Trägerelement 16 schleifenförmig angeordnet ist und auf diese Weise eine erste Temperierfläche 46 bildet.

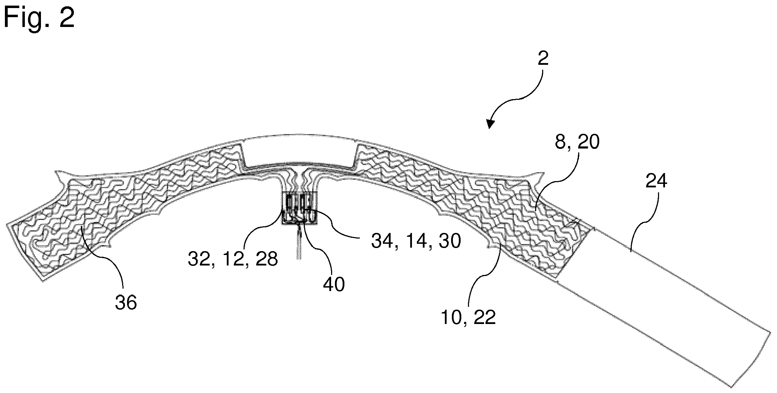

Die zweite Temperierschicht 6 weist ein zweites Temperierelement 10 in Form eines zweiten Heizwiderstands 10' auf, welcher sich auf einem zweiten Trägerelement 18 schleifenförmig aufspannt und dabei eine zweite Temperierfläche 48 bildet. Der schleifenförmige Verlauf des ersten Temperierelements 8 und der schleifenförmige Verlauf des zweiten Temperierelements 10 können dabei unterschiedlich ausgeprägt sein. So kann beispielsweise das erste Temperierelement 8 in engen Schleifen und das zweite Temperierelement 10 in gegenüber den Schleifen des ersten Temperierelements 8 größeren bzw. weiteren Schleifen verlaufen (vgl. Fig. 2); eine umgekehrte Ausgestaltung ist ebenfalls denkbar.

Bei dem ersten Trägerelement 16 und dem zweiten Trägerelement 18 handelt es sich um zumindest bereichsweise voneinander getrennte bzw. unabhängige Trägerelemente. Die Trägerelemente 16, 18 können beispielsweise als Vlies- oder Schaummaterial ausgebildet sein. Um eine ideale Wärmeleitung von den Temperierelementen 8 bzw. 10 auf einen zu temperierenden Bereich 26 eines Gegenstandes 24 zu gewährleisten, weisen die Trägerelemente 16, 18 gegenüber weiteren Bereichen 38 der Temperiervorrichtung 2 bzw. des Gegenstands 24 eine erhöhte Wärmeleitfähigkeit auf.

Durch die Anordnung des ersten Temperierelements 8 auf dem ersten Trägerelement 16 ist eine erste Temperierebene 20 ausgebildet. Durch die Anordnung des zweiten Temperierelements 10 auf dem zweiten Trägerelement 18 ist eine zweite Temperierebene 22 ausgebildet. Bei der ersten Temperierebene 20 und der zweiten Temperierebene 22 handelt es sich vorzugsweise um voneinander unterschiedliche bzw. beabstandete Temperierebenen. Vorzugsweise ist die erste Temperierschicht 4 bzw. das erste Temperierelement 8 in der ersten Temperierebene 20 näher an dem zu temperierenden Bereich 26 des Gegenstandes 24 angeordnet als die zweite Temperierschicht 6 bzw. das zweite Temperierelement 10 in der zweiten Temperierebene 22. Jedoch sind dabei das erste Trägerelement 16 in der ersten Temperierebene 20 und das zweite Trägerelement 18 in der zweiten Temperierebene 22 so zueinander angeordnet, dass sich das auf dem ersten Trägerelement 16 angeordnete erste Temperierelement 8 und das auf dem zweiten Trägerelement 18 angeordnete zweite Temperierelement 10 in einer senkrechten Blickrichtung auf die Trägerelemente 16, 18 in horizontaler Richtung zumindest bereichsweise überdecken (vgl. Fig. 2).

Die erste Temperierschicht 4 umfasst zur Regulation des ersten Temperierelements 8 eine erste Temperaturkontrolleinrichtung 12 sowie eine erste Temperaturerfassungseinrichtung 28 in Form eines Sensors 28' zur Erfassung der Temperatur im Bereich der ersten Temperierschicht 4 bzw. des ersten Temperierelements 8. Die erste Temperaturkontrolleinrichtung 12 sowie die erste Temperaturerfassungseinrichtung 28 sind dabei vorzugsweise in einem ersten Thermostat 32 zusammengefasst. Das erste Thermostat 32 ist mit dem ersten Temperierelement 8 gekoppelt.

Die zweite Temperierschicht 6 umfasst zur Regulation des zweiten Temperierelements 10 eine zweite Temperaturkontrolleinrichtung 14 sowie eine zweite Temperaturerfassungseinrichtung 30 in Form eines Sensors 30' zur Erfassung der Temperatur im Bereich der Temperierschicht 4 bzw. des zweiten Temperierelements 10. Die zweite Temperaturkontrolleinrichtung 14 sowie die zweite Temperaturerfassungseinrichtung 30 sind dabei vorzugsweise in einem zweiten Thermostat 34 zusammengefasst. Das zweite Thermostat 34 ist mit dem zweiten Temperierelement 10 gekoppelt. Die Thermostate 32 und 34 sind jeweils in der Lage, einen Stromflusses zu den Temperierelementen 8, 10 zu unterbrechen, sodass diese keine Temperierleistung aufweisen. Die Thermostate 32, 34 sind getrennt voneinander regelbar, können allerdings über eine Koppelung 42 verbunden sein. Vorzugsweise sind das erste Thermostat 32 und das zweite Thermostat 34 zudem mit dem ersten Temperierelement 8 und dem zweiten Temperierelement 10 gekoppelt, sodass das erste Thermostat 32 sowie das zweite Thermostat 34 jeweils zur Regulation des ersten Temperierelements 8 und des zweiten Temperierelements 10 genutzt werden kann.

Wenn eine erste Temperierschicht 4 und mindestens eine zweite Temperierschicht 6 zumindest bereichsweise übereinander angeordnet sind, so bedeutet dies insbesondere, dass die beiden Temperierschichten einen Überlappungsbereich aufweisen. In diesem Überlappungsbereich sind die beiden Flächen-Normalen der beiden Temperierschichten relativ zur zu temperierenden Oberfläche im Wesentlichen parallel oder identisch zueinander.

Unter einem Strom-Stellglied 112, 114 werden hier Schalter, Potentiometer, Bimetalle, Thermostate oder ähnliches verstanden, mit denen Strom dosiert oder ein- oder ausgeschaltet werden kann.

Die Strom-Stellglieder 112, 114 entsprechen hier den Temperaturkontrolleinrichtungen 12, 14.

Die Strom-Stellglieder 112, 114 können auch den Temperaturerfassungseinrichtungen 28, 30 entsprechen, da in einem Thermostat die Temperaturmessung und die Stromregulation durch ein einziges Bauteil erfolgen kann.

Unter Ansteuerung, insbesondere eines Heizwiderstands, wird hier seine Beaufschlagung mit Strom verstanden.

In Fig. 2 ist eine weitere Ansicht bzw. eine weitere Ausführungsvariante der erfindungsgemäßen Temperiervorrichtung 2 gezeigt. Das erste Temperierelement 8 verläuft, angeordnet auf dem ersten Trägerelement 16, in der ersten Temperierebene 20 in engen Schleifen. Das zweite Temperierelement 10 verläuft, angeordnet auf dem zweiten Trägerelement 18, in der zweiten Temperierebene 22 in größeren Schleifen. Die erste Temperierebene 20 und die zweite Temperierebene 22 bzw. das erste Trägerelement 16 und das zweite Trägerelement 18 sind derart zueinander angeordnet, dass sich das erste Temperierelement 8 und das zweite Temperierelement 10 in horizontaler Richtung bereichsweise überdecken, sodass eine gleichmäßige Temperierfläche 36 aus der ersten und zweiten Temperierfläche 46, 48 (vgl. Fig. 1) entsteht.

Das erste Thermostat 32, welches die erste Temperaturkontrolleinrichtung 12 sowie die erste Temperaturerfassungseinrichtung 28 umfasst, sowie das zweite Thermostat 34, welches die zweite Temperaturkontrolleinrichtung 14 sowie die zweite Temperaturerfassungseinrichtung 30 umfasst, sind in einem gemeinsamen Gehäuse 40 angeordnet.

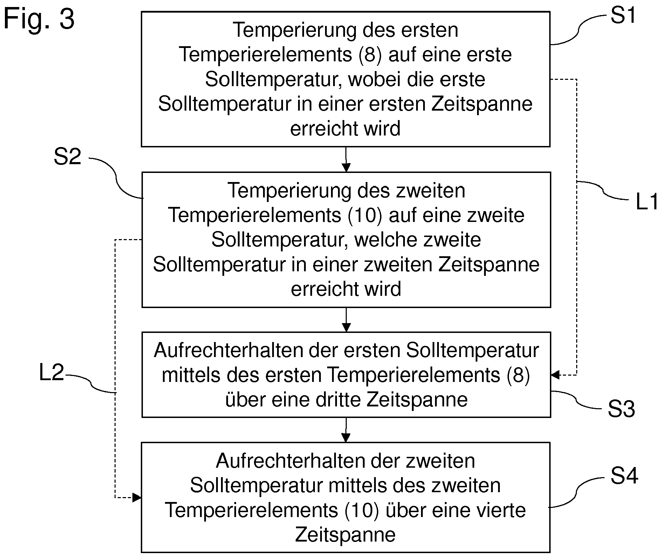

In Fig. 3 ist ein Flussdiagramm eines erfindungsgemäßen Verfahrens abgebildet. In Schritt S1 ist die Temperierung des ersten Temperierelements 8 auf eine erste Solltemperatur vorgesehen, wobei die erste Solltemperatur in einer ersten Zeitspanne erreicht wird. Anschließend wird in Schritt S2 das zweite Temperierelement 10 auf eine zweite Solltemperatur temperiert, welche zweite Solltemperatur in einer zweiten Zeitspanne erreicht wird. In Schritt S3 soll mittels des ersten Temperierelements 8 die erste Solltemperatur über eine dritte Zeitspanne aufrechterhalten werden. Im folgenden Schritt 4 wird auch die zweite Solltemperatur mittels des zweiten Temperierelements 10 über eine vierte Zeitspanne aufrechterhalten.

In einer bevorzugten Ausgestaltungsweise des dargestellten Verfahrens kann es vorgesehen sein, dass der Schritt S1 und der Schritt S2 zeitgleich oder zumindest annähernd zeitgleich gestartet werden. Vorzugsweise sind die erste Zeitspanne und die zweite Zeitspanne, sowie die erste Solltemperatur und die zweite Solltemperatur zumindest nahezu identisch. In manchen Fällen kann sich jedoch auch eine Überschneidung der einzelnen Verfahrensschritte bzw. ggf. sogar eine Veränderung der Reihenfolge der Verfahrensschritte ergeben. Ist beispielsweise Schritt S2 bereits abgeschlossen, Schritt S1 jedoch noch nicht, kann auf Schritt S2 folgend der Schritt S4 durchgeführt werden, und anschließend Schritt S3. Diese Vorgehensweise ist anhand der unterbrochenen Linien L1 und L2 dargestellt. Der Schritt S4 kann dabei solange aufrechterhalten werden, bis Schritt S1 ausgeführt ist.

Die Erfindung wurde unter Bezugnahme auf die anhand der Figuren 1, 2 und 3 beschriebenen Ausführungsformen veranschaulicht. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 2: Temperiervorrichtung
- 4: erste Temperierschicht
- 6: zweite Temperierschicht
- 8, 8': erstes Temperierelement, erster Heizwiderstand
- 10, 10': zweites Temperierelement, zweiter Heizwiderstand
- 12: erste Temperaturkontrolleinrichtung
- 14: zweite Temperaturkontrolleinrichtung
- 16: erstes Trägerelement
- 18: zweites Trägerelement
- 20: erste Temperierebene
- 22: zweite Temperierebene
- 24: Gegenstand
- 26: zu temperierender Bereich des Gegenstandes
- 28, 28': erste Temperaturerfassungseinrichtung, erster Sensor zur Temperaturerfassung
- 30, 30': zweite Temperaturerfassungseinrichtung, zweiter Sensor zur Temperaturerfassung
- 32: erstes Thermostat
- 34: zweites Thermostat
- 36: Temperierfläche
- 38: weitere Bereiche der Temperiervorrichtung bzw. des Gegenstand
- 40: Gehäuse
- 42: Koppelung
- 46: erste Temperierfläche
- 48: zweite Temperierfläche
- 112: Strom-Stellglied
- 114: Strom Stellglied
- S1: Schritt 1
- S2: Schritt 2
- S3: Schritt 3
- S4: Schritt 4
- L1: weitere Vorgehensweise
- L2: weitere Vorgehensweise

## Patentansprüche

1. Temperiervorrichtung (2) zur Temperierung der Oberfläche eines Gegenstandes (24) umfassend:
- eine erste Temperierschicht (4) mit mindestens einem ersten Temperierelement (8, 8') zu deren Temperierung und mit mindestens einer ersten Temperaturerfassungseinrichtung (28, 28') zur Erfassung einer im Bereich der ersten Temperierschicht (4) und/oder des mindestens einen ersten Temperierelements (8, 8') herrschenden oder gebildeten Temperatur,
- mindestens eine zweite Temperierschicht (6) mit mindestens einem zweiten Temperierelement (10, 10') zu deren Temperierung und mit mindestens einer zweiten Temperaturerfassungseinrichtung (30, 30') zur Erfassung einer im Bereich der mindestens einen zweiten Temperierschicht (6) und/oder des mindestens einen zweiten Temperierelements (10, 10') herrschenden oder gebildeten Temperatur,
- mindestens eine Temperaturkontrolleinrichtung (12, 14), welche zur Regulation der Temperierung und/oder der Temperatur des mindestens einen ersten Temperierelements (8, 8') der ersten Temperierschicht (4) und/oder des mindestens einen zweiten Temperierelements (10, 10') der mindestens einen zweiten Temperierschicht (6) vorgesehen ist,
- wobei die mindestens eine Temperaturkontrolleinrichtung (12, 14) mit der mindestens einen ersten Temperaturerfassungseinrichtung (28, 28') und der mindestens einen zweiten Temperaturerfassungseinrichtung (30, 30') gekoppelt ist,
- wobei die erste Temperierschicht (4) und die mindestens eine zweite Temperierschicht (6) zumindest bereichsweise übereinander angeordnet sind, und
- wobei das mindestens eine erste Temperierelement (8, 8') der ersten Temperierschicht (4) und das mindestens eine zweite Temperierelement (10, 10') der mindestens einen zweiten Temperierschicht (6) mittels der mindestens einen Temperaturkontrolleinrichtung (12, 14) unabhängig voneinander regelbar sind
**dadurch gekennzeichnet, dass**
der ersten Temperierschicht (4) und der mindestens einen zweiten Temperierschicht (6) zur Regulation der Temperierung und/oder der Temperatur des mindestens einen ersten Temperierelements (8, 8') sowie des mindestens einen zweiten Temperierelements (10, 10') eine erste Temperaturkontrolleinrichtung (12) sowie eine zweite Temperaturkontrolleinrichtung (14) zugeordnet ist, welche erste und zweite Temperaturkontrolleinrichtung (12, 14) mit der mindestens einen ersten Temperaturerfassungseinrichtung (28, 28') sowie der mindestens einen zweiten Temperaturerfassungseinrichtung (30, 30') gekoppelt sind, wobei die erste Temperaturkontrolleinrichtung (12) und die mindestens eine erste Temperaturerfassungseinrichtung (28, 28') in einem ersten Thermostat (32) zusammengefasst sind, und wobei die zweite Temperaturkontrolleinrichtung (14) und die mindestens eine zweite Temperaturerfassungseinrichtung (30, 30') in einem zweiten Thermostat (34) zusammengefasst sind.

2. Temperiervorrichtung (2) nach Anspruch 1, wobei das erste Thermostat (32) zur Regulation der Temperierung und/oder der Temperatur des mindestens einen ersten Temperierelements (8, 8') und/oder des mindestens einen zweiten Temperierelements (10, 10') auf eine Temperatur innerhalb eines definierten Bereichs geeignet ist, wobei die Temperatur um weniger als 5°C, um weniger als 3°C, um weniger als 1°C von einer vorgesehenen Solltemperatur abweicht.

3. Temperiervorrichtung (2) nach Anspruch 1 oder 2, wobei das zweite Thermostat (34) zur Regulation der Temperierung und/oder der Temperatur des mindestens einen ersten Temperierelements (8, 8') und/oder des mindestens einen zweiten Temperierelements (10, 10') auf eine Temperatur innerhalb eines definierten Bereichs geeignet ist, wobei die Temperatur um mindestens 5°C, um mindestens 8°C, um mindestens 10°C von einer vorgesehenen Solltemperatur abweicht.

4. Temperiervorrichtung (2) nach einem der Ansprüche 1 bis 3, wobei eine minimale Temperatur der durch das zweite Thermostat (34) geregelten Temperierung des mindestens einen ersten Temperierelements (8, 8') und/oder des mindestens einen zweiten Temperierelements (10, 10') in einem Bereich unter 20°C, in einem Bereich unter 15°C liegt.

5. Temperiervorrichtung (2) nach einem der Ansprüche 1 bis 4, wobei eine maximale Temperatur der durch das zweite Thermostat (34) geregelten Temperierung des mindestens einen ersten Temperierelements (8, 8') und/oder des mindestens einen zweiten Temperierelements (10, 10') zumindest um 10°C über der Solltemperatur, zumindest in einem Bereich über 20°C liegt.

6. Temperiervorrichtung (2) nach einem der Ansprüche 1 bis 5, wobei die erste Temperierschicht (4) und/oder das mindestens eine erste Temperierelement (8, 8') zumindest teilweise in einer ersten Temperierebene (20) angeordnet ist, und wobei die mindestens eine zweite Temperierschicht (6) und/oder das mindestens eine zweite Temperierelement (10, 10') teilweise in einer zweiten Temperierebene (22) angeordnet ist, welche erste Temperierebene (20) und welche zweite Temperierebene (22) voneinander beabstandet sind.

7. Temperiervorrichtung (2) nach einem der Ansprüche 1 bis 6, wobei das mindestens eine erste Temperierelement (8, 8') zumindest teilweise auf einem ersten Trägerelement (16) und das mindestens eine zweite Temperierelement (10, 10') zumindest teilweise auf einem zweiten Trägerelement (18) angeordnet sind, welches erste Trägerelement (16) und welches zweite Trägerelement (18) zumindest bereichsweise voneinander beabstandet angeordnet sind.

8. Temperiervorrichtung (2) nach Anspruch 7, wobei das erste Trägerelement (16) und/oder das zweite Trägerelement (18) jeweils eine höhere thermische Wärmeleitfähigkeit besitzen als weitere Bereiche (38) der Temperiervorrichtung (2).

9. Temperiervorrichtung (2) nach einem der Ansprüche 1 bis 8, wobei das mindestens eine erste Temperierelement (8, 8') der ersten Temperierschicht (4) mindestens eine erste elektrische Schleife, und das mindestens eine zweite Temperierelement (10, 10') der mindestens einen zweiten Temperierschicht (6) mindestens eine zweite elektrische Schleife ausbilden.

10. Temperiervorrichtung (2) nach Anspruch 9, wobei sich die mindestens eine erste elektrische Schleife des mindestens einen ersten Temperierelements (8, 8'), welches zumindest teilweise in der ersten Temperierebene (20) angeordnet ist, und die mindestens eine zweite elektrische Schleife des mindestens einen zweiten Temperierelements (10, 10'), welches zumindest teilweise in der zweiten Temperierebene (22) angeordnet ist, zumindest bereichsweise in horizontaler Richtung überdecken.

11. Temperiervorrichtung (2) nach einem der Ansprüche 1 bis 10, wobei die erste Temperierschicht (4) näher an einem zu temperierenden Bereich (26) angeordnet ist als die mindestens eine zweite Temperierschicht (6).

12. Zu temperierender Gegenstand (24), umfassend eine Temperiervorrichtung (2) gemäß einem oder mehreren der Ansprüche 1 bis 11.

13. Zu temperierender Gegenstand (24) nach Anspruch 12, wobei das erste Trägerelement (16) und/oder das zweite Trägerelement (18) der Temperiervorrichtung (2) jeweils eine höhere thermische Wärmeleitfähigkeit besitzen als der zu temperierende Gegenstand (24).

14. Zu temperierender Gegenstand (24) nach Anspruch 12 oder 13, wobei es sich bei dem Gegenstand (24) um ein Fahrzeuglenkrad oder einen Fahrzeugsitz handelt.

15. Verfahren zur Regulation einer Temperiervorrichtung (2) nach einem der Ansprüche 1 bis 11, wobei das Verfahren zumindest die folgenden Schritte umfasst:
- Temperierung mindestens eines ersten Temperierelements (8, 8') auf eine erste Solltemperatur, wobei die erste Solltemperatur in einer ersten Zeitspanne zumindest annähernd erreicht wird,
- Temperierung mindestens eines zweiten Temperierelements (10, 10') auf eine zweite Solltemperatur, welche zweite Solltemperatur in einer zweiten Zeitspanne zumindest annähernd erreicht wird,
- Aufrechterhalten der ersten Solltemperatur mittels des mindestens einen ersten Temperierelements (8, 8') über eine dritte Zeitspanne,
- Aufrechterhalten der zweiten Solltemperatur mittels des mindestens einen zweiten Temperierelements (10, 10') über eine vierte Zeitspanne, **dadurch gekennzeichnet, dass** die dritte Zeitspanne zumindest geringfügig größer ist als die vierte Zeitspanne.

16. Verfahren zur Regulation einer Temperiervorrichtung (2) nach Anspruch 15, wobei sich die erste Solltemperatur und die zweite Solltemperatur zumindest annähernd entsprechen.

17. Verfahren nach Anspruch 15 oder 16, wobei die Temperierung des mindestens einen ersten Temperierelements (8, 8') auf die erste Solltemperatur und die Temperierung des mindestens einen zweiten Temperierelements (10, 10') auf die zweite Solltemperatur zumindest annähernd zeitgleich begonnen wird.

18. Verfahren nach einem der Ansprüche 15 bis 17, wobei ein Stromfluss zu dem mindestens einen zweiten Temperierelement (10, 10') unterbrochen wird, sobald die erste Solltemperatur durch das mindestens eine erste Temperierelement (8, 8') erreicht wird.

19. Verfahren nach einem der Ansprüche 15 bis 18, wobei die zweite Solltemperatur mittels des mindestens einen zweiten Temperierelements (10, 10') zumindest solange aufrechterhalten wird, bis das mindestens eine erste Temperierelement (8, 8') die erste Solltemperatur erreicht oder erreicht hat.

## Claims

1. A temperature-regulating apparatus (2) for temperature regulation of the surface of an object (24), the temperature-regulating apparatus (2) comprising:
- a first temperature-regulating layer (4) with at least one first temperature-regulating element (8, 8') for the temperature regulation of said first layer (4) and with at least one first temperature detection device (28, 28') for the detection of a temperature prevailing or formed in the area of the first temperature-regulating layer (4) and/or of the at least one first temperature-regulating element (8, 8');
- at least one second temperature-regulating layer (6) with at least one second temperature-regulating element (10, 10') for the temperature regulation of said second layer (6) and with at least one second temperature detection device (30, 30') for the detection of a temperature prevailing or formed in the area of the at least one second temperature-regulating layer (6) and/or of the at least one second temperature-regulating element (10, 10');
- at least one temperature control device (12, 14), which is provided for the adjustment of the temperature regulation and/or of the temperature of the at least one first temperature-regulating element (8, 8') of the first temperature-regulating layer (4) and/or of the at least one second temperature-regulating element (10, 10') of the at least one second temperature-regulating layer (6),
- wherein the at least one temperature control device (12, 14) is coupled with the at least one first temperature detection device (28, 28') and the at least one second temperature detection device (30, 30');
- wherein the first temperature-regulating layer (4) and the at least one second temperature-regulating layer (6) are at least in some areas disposed on top of each other; and
- wherein the at least one first temperature-regulating element (8, 8') of the first temperature-regulating layer (4) and the at least one second temperature-regulating element (10, 10') of the at least one second temperature-regulating layer (6) are regulatable independently of one another by means of the at least one temperature control device (12, 14),
**characterised in that**
the first temperature-regulating layer (4) and the at least one second temperature-regulating layer (6) is assigned a first temperature control device (12) as well as a second temperature control device (14) for the adjustment of the temperature regulation and/or of the temperature of the at least one first temperature-regulating element (8, 8') as well as of the at least one second temperature-regulating element (10, 10'), which first and second temperature control devices (12, 14) are coupled with the at least one first temperature detection device (28, 28') as well as with the at least one second temperature detection device (30, 30'), wherein the first temperature control device (12) and the at least one first temperature detection device (28, 28') are integrated in a first thermostat (32), and wherein the second temperature control device (14) and the at least one second temperature detection device (30, 30') are integrated in a second thermostat (34).

2. The temperature-regulating apparatus (2) according to claim 1, wherein the first thermostat (32) is suitable for the adjustment of the temperature regulation and/or of the temperature of the at least one first temperature-regulating element (8, 8') and/or of the at least one second temperature-regulating element (10, 10') to a temperature within a defined range, wherein the temperature deviates by less than 5°C, by less than 3°C, by less than 1°C from an intended target temperature.

3. The temperature-regulating apparatus (2) according to claim 1 or 2, wherein the second thermostat (34) is suitable for the adjustment of the temperature regulation and/or of the temperature of the at least one first temperature-regulating element (8, 8') and/or of the at least one second temperature-regulating element (10, 10') to a temperature within a defined range, wherein the temperature deviates by at least 5°C, by at least 8°C, by at least 10°C from an intended target temperature.

4. The temperature-regulating apparatus (2) according to one of the claims 1 to 3, wherein a minimum temperature of the temperature regulation adjusted by the second thermostat (34) for the at least one first temperature-regulating element (8, 8') and/or for the at least one second temperature-regulating element (10, 10') is in a range below 20°C, in a range below 15°C.

5. The temperature-regulating apparatus (2) according to one of the claims 1 to 4, wherein a maximum temperature of the temperature regulation adjusted by the second thermostat (34) for the at least one first temperature-regulating element (8, 8') and/or for the at least one second temperature-regulating element (10, 10') is by 10°C above the target temperature, at least in a range above 20°C.

6. The temperature-regulating apparatus (2) according to one of the claims 1 to 5, wherein the first temperature-regulating layer (4) and/or the at least one first temperature-regulating element (8, 8') is at least partly disposed in a first temperature regulation level (20), and wherein the at least one second temperature-regulating layer (6) and/or the at least one second temperature-regulating element (10, 10') is partly disposed in a second temperature regulation level (22), which first temperature regulation level (20) and which second temperature regulation level (22) are spaced apart from one another.

7. The temperature-regulating apparatus (2) according to one of the claims 1 to 6, wherein the at least one first temperature-regulating element (8, 8') is at least partly disposed on a first carrier element (16) and the at least one second temperature-regulating element (10, 10') is at least partly disposed on a second carrier element (18), which first carrier element (16) and which second carrier element (18) are at least in some areas disposed spaced apart from one another.

8. The temperature-regulating apparatus (2) according to claim 7, wherein the first carrier element (16) and/or the second carrier element (18) in each instance have a higher thermal conductivity than further areas (38) of the temperature-regulating apparatus (2).

9. The temperature-regulating apparatus (2) according to one of the claims 1 to 8, wherein the at least one first temperature-regulating element (8, 8') of the first temperature-regulating layer (4) forms at least one first electric loop, and the at least one second temperature-regulating element (10, 10') of the at least one second temperature-regulating layer (6) forms at least one second electric loop.

10. The temperature-regulating apparatus (2) according to claim 9, wherein the at least one first electric loop of the at least one first temperature-regulating element (8, 8'), which is at least partly disposed in the first temperature regulation level (20), and the at least one second electric loop of the at least one second temperature-regulating element (10, 10'), which is at least partly disposed in the second temperature regulation level (22), at least in some areas overlap in horizontal direction.

11. The temperature-regulating apparatus (2) according to one of the claims 1 to 10, wherein the first temperature-regulating layer (4) is disposed closer than the at least one second temperature-regulating layer (6) to an area to be temperature-regulated (26).

12. An object (24) to be temperature-regulated, comprising a temperature-regulating apparatus (2) according to one or more of the claims 1 to 11.

13. The object (24) to be temperature-regulated according to claim 12, wherein the first carrier element (16) and/or the second carrier element (18) of the temperature-regulating apparatus (2) each have a higher thermal conductivity than the object (24) to be temperature-regulated.

14. The object (24) to be temperature-regulated according to claim 12 or 13, wherein the object (24) is a vehicle steering wheel or a vehicle seat.

15. A method for the adjustment of a temperature-regulating apparatus (2) according to one of the claims 1 to 11, wherein the method comprises at least the following steps:
- temperature regulation of at least one first temperature-regulating element (8, 8') to a first target temperature, wherein the first target temperature is at least nearly reached in a first time interval;
- temperature regulation of at least one second temperature-regulating element (10, 10') to a second target temperature, which second target temperature is at least nearly reached in a second time interval;
- maintaining of the first target temperature over a third time interval by means of the at least one first temperature-regulating element (8, 8');
- maintaining of the second target temperature over a fourth time interval by means of the at least one second temperature-regulating element (10, 10'), **characterised in that** the third time interval is at least slightly greater than the fourth time interval.

16. The method for the adjustment of a temperature-regulating apparatus (2) according to claim 15, wherein the first target temperature and the second target temperature at least approximately correspond to one another.

17. The method according to claim 15 or 16, wherein the temperature regulation of the at least one first temperature-regulating element (8, 8') to the first target temperature and the temperature regulation of the at least one second temperature-regulating element (10, 10') to the second target temperature are started at least approximately simultaneously.

18. The method according to one of the claims 15 to 17, wherein a current flow to the at least one second temperature-regulating element (10, 10') is interrupted as soon as the first target temperature is reached by the at least one first temperature-regulating element (8, 8').

19. The method according to one of the claims 15 to 18, wherein the second target temperature is maintained by means of the at least one second temperature-regulating element (10, 10') for at least until the at least one first temperature-regulating element (8, 8') reaches or has reached the first target temperature.

## Revendications

1. Dispositif de régulation thermique (2) destiné à réguler la température d'une surface d'un objet (24), comprenant :
- une première couche de régulation thermique (4) dotée d'au moins un premier élément de régulation thermique (8, 8') pour en réguler la température, et d'au moins un premier moyen de détection de température (28, 28') pour détecter une température régnant ou générée dans la zone de la première couche de régulation thermique (4) et/ou dudit au moins un premier élément de régulation thermique (8, 8'),
- au moins une deuxième couche de régulation thermique (6) dotée d'au moins un deuxième élément de régulation thermique (10, 10') pour en réguler la température, et d'au moins un deuxième moyen de détection de température (30, 30') pour détecter une température régnant ou générée dans la zone de ladite au moins une deuxième couche de régulation thermique (6) et/ou dudit au moins un deuxième élément de régulation thermique (10, 10'),
- au moins un moyen de contrôle de température (12, 14) prévu pour réguler la régulation thermique et/ou la température dudit au moins un premier élément de régulation thermique (8, 8') de la première couche de régulation thermique (4) et/ou dudit au moins un deuxième élément de régulation thermique (10, 10') de ladite au moins une deuxième couche de régulation thermique (6),
- ledit au moins un moyen de contrôle de température (12, 14) étant accouplé audit au moins un premier moyen de détection de température (28, 28') et dudit au moins un deuxième moyen de détection de température (30, 30'),
- dans lequel la première couche de régulation thermique (4) et ladite au moins une deuxième couche de régulation thermique (6) sont au moins partiellement agencées l'une sur l'autre, et
- ledit au moins un premier élément de régulation thermique (8, 8') de la première couche de régulation thermique (4) et ledit au moins un deuxième élément de régulation thermique (10, 10') de ladite au moins une deuxième couche de régulation thermique (6) étant réglables indépendamment l'une de l'autre au moyen dudit au moins un moyen de contrôle de température (12, 14),
**caractérisé en ce qu'**
un premier moyen de contrôle de température (12) ainsi qu'un deuxième moyen de contrôle de température (14) sont associés à la première couche de régulation thermique (4) et à ladite au moins une deuxième couche de régulation thermique (6) pour réguler la régulation thermique et/ou la température dudit au moins un premier élément de régulation thermique (8, 8') ainsi que dudit au moins un deuxième élément de régulation thermique (10, 10'), lesquels premier et deuxième moyen de contrôle de température (12, 14) sont accouplés au dit au moins un premier moyen de détection de température (28, 28') ainsi qu'au dit au moins un deuxième moyen de détection de température (30, 30'), dans lequel le premier moyen de contrôle de température (12) et ledit au moins un premier moyen de détection de température (28, 28') sont rassemblés dans un premier thermostat (32), et dans lequel le deuxième moyen de contrôle de température (14) et ledit au moins un deuxième moyen de détection de température (30, 30) étant rassemblés dans un deuxième thermostat (34).

2. Dispositif de régulation thermique (2) selon la revendication 1, le premier thermostat (32) destiné à réguler la régulation thermique et/ou la température dudit au moins un premier élément de régulation thermique (8, 8') et/ou dudit au moins un deuxième élément de régulation thermique (10, 10') sont adaptés à une température située à l'intérieur d'une zone définie, dans lequel la température diffère de moins de 5°C, de moins de 3°C, de moins de 1°C d'une température nominale prévue.

3. Dispositif de régulation thermique (2) selon la revendication 1 ou 2, dans lequel le deuxième thermostat (34) destiné à réguler la régulation thermique et/ou la température dudit au moins un premier élément de régulation thermique (8, 8') et/ou dudit au moins un deuxième élément de régulation thermique (10, 10') sont adaptés à une température située à l'intérieur d'une zone définie, dans lequel la température diffère d'au moins 5°C, d'au moins 8°C, d'au moins 10°C d'une température nominale prévue.

4. Dispositif de régulation thermique (2) selon l'une quelconque des revendications 1 à 3, dans lequel une température minimale de la régulation thermique dudit au moins un premier élément de régulation thermique (8, 8') et/ou dudit au moins un deuxième élément de température (10, 10'), réglée par le deuxième thermostat (34), se situe dans une zone en-dessous de 20°C, dans une zone en-dessous de 15°C.

5. Dispositif de régulation thermique (2) selon l'une quelconque des revendications 1 à 4, dans lequel une température maximale de la régulation thermique dudit au moins un premier élément de régulation thermique (8, 8') et/ou dudit au moins un deuxième élément de régulation thermique (10, 10'), réglée par le deuxième thermostat (34), se situant dans une zone de 10°C au-dessus de la température nominale, au moins dans une zone de 20°C au-dessus.

6. Dispositif de régulation thermique (2) selon l'une quelconque des revendications 1 à 5, dans lequel la première couche de régulation thermique (4) et/ou ledit au moins un premier élément de régulation thermique (8, 8') sont agencés au moins partiellement à un premier niveau de régulation thermique (20), et dans lequel ladite au moins une deuxième couche de régulation thermique (6) et/ou ledit au moins un deuxième élément de régulation thermique (10, 10') sont agencés partiellement à un deuxième niveau de régulation thermique (22), ledit premier niveau de régulation thermique (20) et ledit deuxième niveau de régulation thermique (22) étant espacés l'un de l'autre.

7. Dispositif de régulation thermique (2) selon l'une quelconque des revendications 1 à 6, dans lequel ledit au moins un premier élément de régulation thermique (8, 8') étant agencé au moins partiellement sur un premier élément support (16) et ledit au moins un deuxième élément de régulation thermique (10, 10) étant agencé au moins partiellement sur un deuxième élément support (18), ledit premier élément support (16) et ledit deuxième élément support (18) étant agencés au moins partiellement espacés l'un de l'autre.

8. Dispositif de régulation thermique (2) selon la revendication 7, dans lequel le premier élément support (16) et/ou le deuxième élément support (18) possèdent chacun une conductibilité thermique supérieure à celle d'autres zones (38) du dispositif de régulation thermique (2).

9. Dispositif de régulation thermique (2) selon l'une quelconque des revendications 1 à 8, dans lequel ledit au moins un premier élément de régulation thermique (8, 8') de la première couche de régulation thermique (4) constitue au moins une première boucle électrique et ledit au moins un deuxième élément de régulation thermique (10, 10') de ladite au moins une deuxième couche de régulation de température (6) constituant au moins une deuxième boucle électrique.

10. Dispositif de régulation thermique (2) selon la revendication 9, dans lequel ladite au moins une première boucle électrique dudit au moins un premier élément de régulation thermique (8, 8'), qui est au moins partiellement agencé dans le premier plan de régulation thermique (20), et ladite au moins une deuxième boucle électrique dudit au moins un deuxième élément de régulation thermique (10, 10') qui est agencé au moins partiellement dans le deuxième plan de régulation thermique (22), se couvrent au moins partiellement dans le sens horizontal.

11. Dispositif de régulation thermique (2) selon l'une quelconque des revendications 1 à 10, dans lequel la première couche de régulation thermique (4) est agencée à plus grande proximité d'une zone à réguler en température (26) que ladite au moins une deuxième couche de régulation thermique (6).

12. Objet (24) dont la température est à réguler, comprenant un dispositif de régulation thermique (2) selon l'une quelconque ou plusieurs des revendications 1 à 11.

13. Objet (24) dont la température est à réguler, selon la revendication 12, dans lequel le premier élément support (16) et/ou le deuxième élément support (18) du dispositif de régulation thermique (2) possèdent chacun une conductibilité thermique supérieure à celle de l'objet (24) dont la température est à réguler.

14. Objet (24) dont la température est à réguler, selon la revendication 12 ou 13, dans lequel il s'agit, dans le cas de l'objet (24), d'un volant de véhicule ou d'un siège de véhicule.

15. Procédé de régulation d'un dispositif de régulation thermique (2) selon l'une quelconque des revendications 1 à 11, ledit procédé comprenant au moins les étapes suivantes :
- régulation thermique d'au moins un premier élément de régulation thermique (8, 8') à une première température nominale, dans lequel ladite première température nominale est atteinte au moins approximativement dans un premier intervalle de temps,
- régulation thermique d'au moins un deuxième élément de régulation thermique (10, 10') à une deuxième température nominale, dans lequel ladite deuxième température nominale est atteinte au moins approximativement dans un deuxième intervalle de temps,
- maintien de la première température nominale au moyen dudit au moins un premier élément de régulation thermique (8, 8') sur un troisième intervalle de temps,
- maintien de la deuxième température nominale au moyen dudit au moins un deuxième élément de régulation thermique (10, 10') sur un quatrième intervalle de temps, **caractérisé en ce que** le troisième intervalle de temps est au moins légèrement plus long que le quatrième intervalle de temps.

16. Procédé de régulation d'un dispositif de régulation thermique (2) selon la revendication 15, dans lequel la première température nominale et la deuxième température nominale correspondent au moins approximativement l'une à l'autre.

17. Procédé selon la revendication 15 ou 16, dans lequel la régulation thermique dudit au moins un premier élément de régulation thermique (8, 8') à la première température nominale et la régulation thermique dudit au moins un deuxième élément de régulation thermique (10, 10') à la deuxième température nominale sont démarrées au moins approximativement au même moment.

18. Procédé selon l'une quelconque des revendications 15 à 17, dans lequel un flux de courant vers ledit au moins un deuxième élément de régulation thermique (10, 10) est interrompu dès que la première température nominale est atteinte par ledit au moins un premier élément de régulation thermique (8, 8').

19. Procédé selon l'une quelconque des revendications 15 à 18, dans lequel la deuxième température nominale est maintenue au moyen dudit au moins un deuxième élément de régulation thermique (10, 10') au moins jusqu'à ce que ledit au moins un premier élément de régulation thermique (8, 8') atteint ou a atteint la première température nominale.
